# EUROPEAN PATENT SPECIFICATION

(11) **EP 2 686 283 B1**
(45) Date of publication and mention of the grant of the patent: **04.03.2015**
(21) Application number: 12710622.7
(22) Date of filing: 13.03.2012
(51) Int. Cl.: C04B 26/04, C08B 3/00, C08K 3/26, C09D 5/34, C08L 31/04

(54) **HIGH SOLIDS PIGMENTED LATEX COMPOSITIONS**
PIGMENTIERTE LATEXZUSAMMENSETZUNGEN MIT HOHEM FESTSTOFFGEHALT
COMPOSITIONS DE LATEX PIGMENTÉES À HAUTE TENEUR EN SOLIDES

(30) Priority: 18.03.2011 US 201113051434
(43) Date of publication of application: 22.01.2014
(73) Proprietor: Wacker Chemical Corporation, Adrian, MI 49221 (US)
(72) Inventor: DANIELS, Christian, Leonard, Fogelsville, PA 18051 (US); GRUBER, Bruce, Emmaus, PA 18049 (US)
(74) Representative: Schuderer, Michael
(86) International application number: PCT/US2012/028854
(87) International publication number: WO 2012/128993

(56) References cited:
- EP-A2- 0 365 980
- EP-A2- 1 574 489
- EP-A2- 1 679 353
- US-A1- 2004 143 046
- DATABASE CA [Online] CHEMICAL ABSTRACTS SERVICE, COLUMBUS, OHIO, US; KOYAMA, MUNEO ET AL: "Aqueous dispersion paint composition", XP002677071, retrieved from STN Database accession no. 1974:97402 -& JP 48 012855 B (DAINIPPON INK AND CHEMICALS, INC.) 24 April 1973 (1973-04-24) & DATABASE WPI Week 197317 Thomson Scientific, London, GB; AN 1973-24115U & JP 48 012855 B (DAINIPPON INK & CHEM KK) 24 April 1973 (1973-04-24)

## Description

### BACKGROUND OF THE INVENTION

High solids pigmented latex compositions such as mastic and caulking compositions are used in a wide variety of applications to seal and protect architectural material substrates and to seal and protect joints and other openings in architectural materials. They are used in both interior and exterior applications, and in both cases are exposed to conditions such as moisture, sunlight, temperature variations, etc. that require such compositions to have a balance of properties enabling them to perform their intended functions for extended periods of time. Typically, mastics and caulks are fluid or semi-fluid compositions having a solids content of about 60 weight percent or more. They should have permanent low temperature flexibility when cured, particularly in the case of mastic compositions intended for exterior application. Both mastics and caulks should have sufficient wetting ability to readily wet, cover and adhere to even the most hydrophobic architectural substrates such as polyurethane, ethylene-propylene-diene interpolymer materials, and the like. Very low residual surface tack is generally required in cured mastics and caulks, and they should quickly become non-tacky shortly after application to prevent adherence of dust, dirt or other materials.

Mastics are frequently used in combination with scrims for heating, ventilating and air conditioning applications to provide permanent, air tight, flexible, and weather resistant repairs and installations on air ducts, thermal insulation, and crawl spaces. Typical uses included sealing duct leaks in homes, apartments, offices, hospitals, high rises, government and military buildings to improve comfort and indoor air quality and to save energy.

Caulks are flexible sealing compounds used to close up gaps in buildings and other structures against water, air, dust, insects, or as a component in firestopping structures.

U.S. Pat. No. 3,746,679 describes mastics using aqueous latices of vinyl acetate ethylene (VAE) copolymers which are said to form an effective protective coating even at temperatures below 0°C. The mastic composition comprises a VAE latex, ethylene glycol, coalescing agent, fibers and an alkylphenol ethoxylate (APE) surfactant.

U.S. Pat. No. 3,755,029 describes a mastic composition for thermal insulation which comprises a VAE latex, plasticizer, coalescing agent, filler and a surfactant. The nature of the surfactant is not specified, but in the examples only APE surfactants are used (Triton X).

European patent EP 365980 concerns emulsion polymers for latex caulks, particularly copolymers composed of vinyl ester, acrylic acid ester, ethylene and carboxy-functional monomers. The latices are stabilized by surfactants, particularly APE in the examples.

U.S. Pat. No. 5,349,009 describes a water-based construction adhesive mastic said to have improved performance in open time requirements, freeze-thaw-stability and water resistance. The mastic is based on a combination of VAE copolymer emulsion and VAC homopolymer emulsion.

U.S. Pat. No. 6,908,524 describes an APE-free VAE binder for a creped nonwoven web, addressing a problem of loss of adhesion if non-APE surfactants are used. With a surfactant combination of ethoxylated laureth sulfate with an ethoxylated secondary alcohol or ethoxylated branched primary alcohol, Goldstein reports sufficient adhesion despite the absence of APE surfactant.

Traditional binders for mastics and caulks have typically employed alkylphenol ethoxylate (APE) surfactants to maintain polymer dispersion stability. More recently, however, regulatory trends have restricted the use of such surfactants, which are suspected to carry health risks. Thus, mastics and caulks using binder dispersions free of alkylphenol ethoxylates would be of commercial interest.

### SUMMARY OF THE INVENTION

In one aspect, the invention provides a pigmented latex composition having a solids content in a range from 70 wt% to 95 wt%. the composition includes
a) an aqueous dispersion of a polymeric binder that is a copolymer including units of vinyl acetate, ethylene and at least one ethylenically unsaturated carboxylic acid or salt thereof, the polymeric binder constituting in a range from 10 wt% to 30 wt% of the composition; wherein
   vinyl acetate units constitute in a range of 75 - 95 wt% of the polymeric binder, ethylene units constitute in a range of at least 5 wt% of the polymeric binder and ethylenically unsaturated carboxylic acid units constitute in a range from 0.75 wt% to 5 wt% of the polymeric binder;
   the aqueous dispersion of the polymeric binder is free of alkylphenol ethoxylate surfactants and phosphate ester surfactants; and
   the polymeric binder has a weight average particle size in a range from 0.1 µm to 0.3 µm;
b) one or more pigments constituting in a range from 30 wt% to 50 wt% of the composition, selected from the group consisting of polymeric pigments, aluminosilicates, calcium carbonate, titanium dioxide, talc, barium sulfate, zinc oxide, aluminum trihydrate, amorphous silica and silicates;
c) one or more plasticizers; and
d) one or more pigment dispersants.

In another aspect, the invention provides a method of sealing a joint or gap at two adjoining substrate surfaces, comprising applying to the surfaces the composition described above and subsequently curing the composition.

### DETAILED DESCRIPTION OF THE INVENTION

The inventors have found that VAE dispersions in which APE surfactants are merely replaced with other surfactants is not sufficient to provide high solids pigmented compositions, particularly mastics and caulks, having performance properties as good as or better than those made from binder dispersions containing APE surfactants. For example, delayed or incomplete curing may be encountered for mastics applied to the foil side of foil/scrim/kraft (FSK) laminates, such as are commonly used in heating/cooling air duct applications. For caulk compositions, it can be difficult to obtain acceptable extension-recovery and low temperature flex performance (ASTM C-834), particularly at relatively high ratios of pigment to polymeric binder. The inventors have now found that it is possible to obtain acceptable and sometimes superior performance in these and/or other properties by using certain vinyl acetate ethylene (VAE) binder emulsions for the compositions.

The invention provides compositions comprising pigments and/or other fillers admixed with aqueous dispersions of VAE emulsion copolymer resins containing at least 0.75 wt% of unsaturated carboxylic acid units, in which the VAE emulsion is free of APE surfactants and is also free of phosphate ester surfactants. The compositions have a solids content of at least 70 wt%. The solids content will typically be at most 95 wt%, or at most 90 wt%. The compositions also comprise one or more plasticizers and one or more pigment/filler dispersants. As used herein, the term "solids content" refers to the total amount of pigment/filler, binder resin polymer, plasticizers, dispersants and surfactants in the composition. Each of the main components of the compositions will now be described, as well as methods of formulating mastics and caulks according to the invention.

### Polymeric Binder

Polymeric binders useful for making mastics and caulks according to the invention comprise vinyl acetate and ethylene copolymerized with one or more unsaturated carboxylic acid monomers. Vinyl acetate units constitute at least 75 wt% of the dispersed polymer. They constitute at most 95 wt%, or at most 90 wt%, or at most 85 wt% of the dispersed polymer. Ethylene units constitute at least 5 wt%, or at least 10 wt%, or at least 15 wt% of the dispersed polymer. Using an appropriate ratio of ethylene to vinyl acetate provides a binder with a Tg that results in good elasticity and flexibility. Typically suitable Tg values are in a range from -20°C to 12°C.

The amount of ethylenically unsaturated carboxylic acid monomer units in the polymeric binder should be at least 0.75 wt%, or at least 1.0 wt%, or at least 1.25 wt%, or at least 1.5 wt%. It may be as high as 5 wt%, or as high as 4 wt%, or as high as 3 wt%, or as high as 2 wt%. The inventors have found that the presence of sufficient carboxylic functionality is important to effective performance of the binder resin for binding and dispersing pigments in the high viscosity, highly pigmented compositions employed for caulks and mastics.

Examples of suitable unsaturated carboxylic acid monomers include ethylenically unsaturated C3-C8-monocarboxylic acids, such as acrylic acid, methacrylic acid and crotonic acid, ethylenically unsaturated C4-C8-dicarboxylic acids, such as maleic acid, fumaric acid, itaconic acid and the monoamides thereof and monoesters with C1-C12-alkanols, preferably C1-C4-alkanols, such as, for example, monomethyl maleate and mono-n-butyl maleate. Preferred are acrylic acid, methacrylic acid, itaconic acid, crotonic acid and maleic acid.

Unsaturated sulfonic acids may optionally also be included in the monomer composition. Suitable unsaturated sulfonic acid monomers include 2-acrylamido-2-methylpropane sulfonic acid and salts thereof, as well as vinylsulfonic acid and salts thereof. Typical salts include potassium, sodium and ammonium salts. One specific suitable example is available commercially from Lubrizol Corporation of Wickliffe, OH under the name AMPS® 2403. Sulfonic acid/salt monomer units constitute from 0.1 to 5.0 wt%, more typically 0.2 to 1.0 wt%, of the polymeric binder.

Preferred are ethylenically unsaturated sulfonic acids having 2-8 carbon atoms, such as vinylsulfonic acid, 2-acrylamido-2-methylpropanesulfonic acid, 2-acryloyloxyethanesulfonic acid and 2-methacryloyloxyethanesulfonic acid, 2-acryloyloxy- and 3-methacryloyloxypropanesulfonic acid, vinylbenzenesulfonic acid.

In addition to or instead of said acids, it is also possible to use the salts thereof, preferably the alkali metal or ammonium salts thereof, particularly preferably the sodium salts thereof, such as, for example, the sodium salts of vinylsulfonic acid and of 2-acrylamidopropanesulfonic acid.

In some embodiments the binder may include 0 to 30 wt % of other comonomer units from the group consisting of vinyl chloride, vinyl esters and (meth)acrylic acid esters. Suitable other vinyl esters are those of carboxylic acids with 3 to 12 carbon atoms such as vinyl propionate, vinyl butyrate, vinyl 2-ethylhexanoate, vinyl laurate, 1-methyl vinyl acetate, vinyl pivalate and vinyl esters of α-branched monocarboxylic acids with 9 to 13 carbon atoms, such as VeoVa™9, VeoVa™10, or VeoVa™11 (available from Hexion Specialty Chemicals, Inc., Columbus, OH). Suitable methacrylic or acrylic acid esters are esters of straight-chain or branched alcohols having 1 to 15 C atoms, for example methyl acrylate, methyl methacrylate, ethyl acrylate, ethyl methacrylate, propyl acrylate, propyl methacrylate, butyl acrylate (n-, iso- and tert-), n-butyl methacrylate, 2-ethylhexyl acrylate and norbornyl acrylate. Methyl acrylate, methyl methacrylate, butyl acrylate and 2-ethylhexyl acrylate are preferred.

If appropriate in a particular application, auxiliary monomers may also be copolymerized. The amount will typically be from 0.01 wt% to 10 wt%, typically at least 0.05 wt%, based on the total weight of the polymer. Examples of auxiliary monomers are ethylenically unsaturated carboxamides and carbonitriles. Further examples are precrosslinking comonomers, such as polyethylenically unsaturated comonomers, for example divinyl adipate, diallyl maleate, allyl methacrylate or triallyl cyanurate, or postcrosslinking comonomers, for example acrylamidoglycolic acid (AGA), methyl methylacrylamide glycolate (MAGME), N-methylolacrylamide (NMA), N-methylolmethacrylamide (NMMA), N-methylolallyl carbamate, alkyl ethers, such as the isobutoxy ether, or esters of N-methylolacrylamide, of N-methylolmethacrylamide and of N-methylolallyl carbamate. Examples are also epoxide-functional comonomers, such as glycidyl methacrylate and glycidyl acrylate. Further examples are silicon-functional comonomers, such as acryloyloxypropyltri(alkoxy)- and methacryloyloxypropyltri(alkoxy)silanes, vinyltrialkoxysilanes and vinylmethyldialkoxysilanes, preferably with C1 to C3 alkoxy groups such as methoxy or ethoxy.

If present, polyethylenically unsaturated comonomers such as mentioned above will constitute in total from about 0.01 wt% to about 1 wt%. Typically the amount will be at most 0.5 wt%, or at most 0.2 wt%, or at most 0.1 wt%. The presence of a polyunsaturated comonomer is not beneficial in all embodiments of the invention, however, and thus in some embodiments such monomers are to be excluded.

Nonetheless, depending on the specific needs of a given application, it may in some cases be advantageous to exclude certain monomers in making the polymeric binder. In other cases, these monomers may be included up to a limit of 1.0 wt% of the polymeric binder. The excluded or limited monomers may include any one or more of the following: *N*-(C₁₋₄) alkylol (meth)acrylamides (e.g., *N*-methylol acrylamide); i-butoxy methylacrylamide; acrylamidoglycolic acid; acrylamidobutyraldehyde; dialkyl acetals of acrylamidobutyraldehyde; glycidyl-containing compounds (e.g., glycidyl (meth)acrylate, triglycidyl isocyanurate, etc.); ethylenically unsaturated phosphates, phosphonates or sulfates; ethylenically unsaturated silicon compounds; (meth)acrylamide or *N*-substituted meth)acrylamides; (meth)acrylic esters; vinyl or other alkenyl ethers; acrylonitrile; butadiene; styrene; vinyltoluene; divinyl benzene and/or other olefinically unsaturated hydrocarbons other than ethylene; halogenated monomers (e.g., vinyl chloride); and esters of allyl alcohol.

In particular, the inventors have found that including *N*-methylol acrylamide increases the potential for pigment agglomeration / destabilization, and therefore this monomer is preferably excluded. An additional reason to exclude this monomer is its propensity for producing formaldehyde, a toxic material. Other *N*-methylol-containing monomers may also share this problem. Therefore in some embodiments of the invention, the VAE polymeric binder does not contain units of NMA or any other N-methylol-containing monomer, or any other monomer that produces formaldehyde either in the coating composition or on a treated substrate. For the same reason, it may further be desired to exclude urea-formaldehyde, glycol uril, and other formaldehyde-generating moieties in the binder, and preferably in the entire coating composition. Thus in some embodiments, the composition is free of formaldehyde-generating moieties.

To further avoid formaldehyde formation, it is also preferred that the binder copolymer be prepared by initiating the vinyl acetate/ethylene dispersion polymerization with an initiator that does not contain formaldehyde-producing moieties, as opposed to using the more typical redox pair initiator employing formaldehyde-producing sodium formaldehyde sulfoxylate (SFS) or zinc formaldehyde sulfoxylate as the reducing agent. In general, suitable non-formaldehyde generating reducing agents for redox pairs include, as non-limiting examples, those based on ascorbic, bisulfite, erythorbate or tartaric chemistries as known in the art, and a commercial reducing agent known as BRUGGOLITE® FF6M manufactured by Bruggeman Chemical of Heilbronn, Germany. Non-redox initiators may also be used, such as persulfates, peroxides and azo-type initiators, all of which are well known in the art.

Preparation of the binder copolymer is effected by an emulsion polymerization process, typically at a temperature of 30°C to 100°C and at a pressure typically from 5 bar to 100 bar.

The polymerization is initiated with the water-soluble initiators or redox initiator combinations customary for emulsion polymerization. Examples of water-soluble initiators are the sodium, potassium and ammonium salts of peroxodisulfuric acid, hydrogen peroxide, tert-butyl peroxide, tert-butyl hydroperoxide, potassium peroxodiphosphate, tert-butyl peroxopivalate, cumyl hydroperoxide, isopropylbenzyl monohydroperoxide, azobisisobutyronitrile. The initiators are used in general in an amount of from 0.1 to 2.0% by weight, preferably from 0.1 to 1.0% by weight, based in each case on the total weight of the monomers.

Redox initiators used are combinations of said initiators in combination with reducing agents. Suitable reducing agents are the sulfites and bisulfites of the alkali metals and of ammonium, for example sodium sulfite, and ascorbic acid. The amount of reducing agent is in general from 0.1 to 2.0% by weight, preferably from 0.1 to 1.0% by weight, based in each case on the total weight of the monomers.

For controlling the molecular weight, regulating substances can be used during the polymerization. If regulators are used, they are usually employed in amounts of from 0.01 to 5.0% by weight, based on the monomers to be polymerized and are metered separately or premixed with reaction components. Examples of such substances are n-dodecyl mercaptan, tert-dodecyl mercaptan, mercaptopropionic acid, methyl mercaptopropionate, isopropanol and acetaldehyde.

The monomers can all be initially introduced for the preparation of the dispersion (batch process), or a part of the monomers is initially introduced and the remainder is metered (semibatch process). The resultant aqueous dispersions obtainable have a solids content of from 30 to 75% by weight, preferably from 50 to 60% by weight.

### Binder Dispersion Surfactants

Surfactants used to stabilize the binder dispersion include both nonionic and anionic types, but do not include either alkylphenol ethoxylate (APE) surfactants or phosphate ester surfactants. As will be seen in the Examples, the inventors have found the best performance of mastics and/or caulks when both of these classes of surfactant are excluded from the binder emulsion and when a VAE having sufficient carboxyl functionality as described above is used as the binder polymer. As used herein, the term alkylphenol ethoxylate or APE will be understood to include surfactants including alkylphenol ethoxylate moieties either in the nonionic form or as a corresponding sulfate ester.

Suitable anionic surfactants include emulsifiers such as alkali metal and ammonium salts of C6 to C18 alkyl sulfates, of sulfuric monoesters of ethoxylated C6 to C22 alkanols with 2 to 50 EO units, of C12-C18 alkylsulfonic acids, of C9-C18 alkylarylsulfonic acids, of sulfosuccinic monoesters and sulfosuccinic diesters of C6-C22 alkanols and ethoxylated C6-C22 alkanols with 2 to 50 EO units, and nonethoxylated C4-C9-alkylphenols. Specific examples of useful anionic surfactants include sodium dihexyl sulfosuccinates (available commercially as AEROSOL® MA-80-I from Cytec Industries Inc. of Patterson, NJ), sodium dodecyl benzenesulfonates (available commercially as RHODACAL® DS-10 from Rhodia of Cranbury, NJ.

Suitable nonionic surfactants include polyethylene oxide/polypropylene oxide block copolymers. A specific useful nonionic surfactant is available commercially as PLURONIC® L64 from BASF Corporation of Florham Park, NJ. PLURONIC® L64 is a polyethylene oxide/polypropylene oxide block copolymer, more specifically a triblock copolymer according to the formula (ethylene oxide)₁₃(propylene oxide)₃₀(ethylene oxide)₁₃. Other polyethylene oxide/polypropylene oxide block copolymers, especially triblock copolymers, may be used instead or in addition. Other nonionic surfactants may be included along with the polyethylene oxide/polypropylene oxide block copolymer surfactants, but they are not required. Examples of such optional nonionic surfactants include ethoxylates of long-chain branched or unbranched C6-C36 alcohols with 3 to 50 EO units, and aryl-substituted phenol alkyleneoxy ethers. Specific examples include ethylene oxide tridecyl alcohols sold commercially as RHODASURF® TLA 4050 (Rhodia) and RHODASURF® TLA3040 (Rhodia). The nonionic surfactant may also include a secondary alcohol ethoxylate, such as 2-pentadecanol ethoxylate, containing 7 to 30 moles, preferably 12 to 20 moles, of ethylene oxide or an ethoxylated branched primary alcohol, such as tridecanol ethoxylate, containing 3 to 30 moles, preferably 9 to 20 moles, of ethylene oxide. The primary or secondary alcohol can contain 7 to 18, preferably 9 to 14 carbons. An example of an appropriate nonionic surfactant is TERGITOL® 15-S-20 (a secondary alcohol ethoxylate containing 20 moles of ethylene oxide), supplied by Dow as an 80% aqueous solution.

The amount of total surfactant used in the dispersion falls in a range of 0.01 to 5.0 wt% and more preferably in the range of 0.1 to 3.8 wt%, based on total polymer.

Optionally in addition to the surfactants protective colloids can be used in the polymerization. Suitable protective colloids for the polymerization are polyvinyl alcohols; polyvinyl acetals; polyvinylpyrrolidones; polysaccharides in water-soluble form, such as starches (amylose and amylopectin), celluloses and the carboxymethyl, methyl, hydroxyethyl and hydroxypropyl derivatives thereof, dextrins and cyclodextrins; proteins, such as casein or caseinate, soybean protein, gelatin; lignosulfonates; synthetic polymers, such as poly(meth)acrylic acid, copolymers of (meth)acrylates with carboxy-functional comonomer units, poly(meth)acrylamide, polyvinylsulfonic acids and the water-soluble copolymers thereof; styrene-maleic acid and vinyl ether-maleic acid copolymers; cationic polymers, such as poly-DADMAC.

Partly hydrolyzed or completely hydrolyzed polyvinyl alcohols having a degree of hydrolysis of from 80 to 100 mol%, in particular partly hydrolyzed polyvinyl alcohols having a degree of hydrolysis of from 80 to 95 mol% and a Höppler viscosity, in 4% strength aqueous solution, of from 1 to 30 mPa·s (Höppler method at 20°C, DIN 53015) are preferred. Partly hydrolyzed polyvinyl alcohols having a degree of hydrolysis of from 85 to 94 mol% and a Höppler viscosity, in 4% strength aqueous solution, of from 3 to 25 mPa·s (Höppler method at 20°C, DIN 53015) are most preferred.

The particles of the binder emulsion have a small / narrow particle size distribution having a mean particle size less than 1 µm, typically in a range from 0.1 to 0.3 µm. This particle size allows for good rheology and provides a high surface area for pigment-to-pigment binding strength.

### Pigments

The mastic and caulk compositions of the invention include relatively high levels of pigments. As used herein, the term "pigment" includes any solid particulate material commonly used to provide color (especially white) or to act as a filler. Suitable pigments and/or fillers may include, for example, alkaline earth metal sulfates or carbonates, such as, for example, barites, calcium carbonate, calcite and magnesium carbonate; silicates, such as, for example, calcium silicates, magnesium silicates, and talc; metal oxides and hydroxides, such as, for example, titanium dioxide, alumina and iron oxides; diatomaceous earth; colloidal silica; fumed silica; carbon black; white carbon black; nutshell flour; natural and synthetic fibers (especially plaster fibers); and scrap or recycled plastics in the form of dust, flakes or flour; hollow or solid ceramic, glass or polymeric microspheres.

### Plasticizers

The high solids pigmented compositions include one or more plasticizers to maintain flexibility in use. Suitable plasticizers are known in the art, for example benzoate, phthalate, or other ester plasticizers. Exemplary plasticizers include diethylene glycol dibenzoate, dipropylene glycol dibenzoate, butylbenzyl phthalate, N-n-butylbenzenesulfonamide, polyoxyethylene aryl ether, tributoxyethyl phosphate, and BENZOFLEX™ 9-88 benzoate ester plasticizer and TXIB™ 2,2,4-trimethyl-1,3-pentanediol diisobutyrate, both available from Eastman, Kingsport, TN.

### Dispersants

One or more dispersants are included in the composition to produce a more uniform and stable distribution of the pigment/filler particles. Exemplary dispersants are sold commercially as ACRYSOL™ RM-825 polyurethane rheology modifier (Rohm and Haas), TAMOL® 850 sodium polymethacrylate (Dow Chemical), and DAXAD™ 30 sodium polymethacrylate (Dow Chemical).

### Other Ingredients

The pigmented compositions, particularly caulk or sealant or mastic compositions, of the invention may be adapted for use in a variety of specific applications, and generally exhibit excellent performance properties without the need for specialized ingredients such as propellants and foaming/blowing agents, e.g., low boiling hydrocarbons, halocarbons and halohydrocarbons, or polyphosphoric acids or salts thereof, as have been used in some specialized compositions. Similarly, other polymers such as vinyl acetate homopolymers or polymers containing more that 10 wt% of acrylic acid units have also been used in some mastics or caulks, but these are not needed for purposes of the present invention. Drying oils and waxes are also not required. Thus, in some embodiments any or all of these other ingredients may be excluded from the caulk or mastic.

The aqueous caulk or sealant compositions may be prepared by techniques which are well known in the sealants art. For example, the aqueous binder is added directly to a kettle, followed by additional ingredients and, lastly, by the filler and pigment. Mixing may be done in a high shear mixer with a sweep arm designed to pull the high viscosity sealant into the center of the mixer, or in a planetary mixer, with or without a high speed disperser blade. After all of the ingredients are added, the sealant is allowed to mix under a vacuum of 750 mm Hg or lower to remove entrapped air from the final product.

Typically, the caulks and mastics may have filler to binder (solids weight) ratios of at least 0.04, or at least 0.1, or at least 0.2. Typically, the ratio will be at most 4.0.

To enable improved adhesion, especially to glass, the caulks and sealants may comprise one or more organosilane adhesion promoter in amounts ranging from 0.001 wt% or 0.01 wt% to 0.5 wt%, 1.0 wt% or 5 wt%, based on the total composition.

Suitable organosilanes may include, for example, any hydrolyzable or alkoxy functional organosilanes, such as, for example, trialkoxysilanes; aminoalkylsilanes or aminoalkoxysilanes, such as γ-aminopropyl triethoxysilane and N-(dimethoxymethylsilylisobutyl)ethylenediamine; epoxy functional alkoxysilanes, such as glycidyl propoxymethyl dimethoxysilane, γ-glycidoxypropyl-methyl-diethoxysilane, γ-glycidoxypropyl trimethoxysilane, and β-(3,4-epoxycycyclohexyl)ethyl trimethoxysilane; and γ-mercaptoalkoxysilanes.

Solvents may be added to improve tooling in use, increase open time (storage stability) and to better disperse additives, such as the silanes. Suitable solvents may include, for example, mineral spirits, turpentine, mineral oil, and (poly)alkylene glycols.

The compositions of the present invention may also include other additives conventionally employed in caulks and sealants, such as, for example, free-thaw stabilizers, drying oils, biocides, rheology modifiers or thickeners, such as cellulosics, kaolin, polyurethane thickeners, antifoamants, colorants, waxes and anti-oxidants.

The compositions of the present invention are suitable for uses including caulks, sealants and construction adhesives, such as by applying the caulk and sealant to a substrate from a cartridge and allowing it to dry. Caulks and sealants can be applied to various substrates including wood, glass, metal, masonry, vinyl, brick, concrete block, fiber cement, gypsum, stone, tile and asphalt. Uses may include caulking and sealing windows, doors, fixtures, paneling, molding, finished walls and ceilings, and any gap, seam or joint therein or between substrate pieces, such as in tilt-up construction and chinking applications.

### Mastics

Mastics according to the invention include VAE polymers having the compositions and characteristics described above, and are free of APE surfactants and phosphate ester surfactants. The mastics according to the invention provide excellent strength, flexibility and workability, as well as rapid cure rates, while avoiding the use of APE surfactants.

Preparation of the mastics may be according to formulation principles generally known in the art. In general, the mastics are aqueous formulations having a solids content of at least 70 wt%. The solids content is typically at most 75 wt%.

Kaolin and/or calcium carbonate are typical pigments, but others may be used instead or in addition. For example, calcium carbonate may constitute most of the pigment, with a clay being added at a 2-3 wt% level based on total mastic formulation weight. Thixotroping agents such as magnesium aluminum silicates or hydroxyethyl cellulose may be included in small amounts, for example at about 0.5-3 wt%. In total, the pigments will typically constitute at least 30 wt%, or at least 33 wt%, or at least 36 wt% of the mastic composition. The pigments typically constitute at most 50 wt% of the composition, or at most 47 wt%, or at most 44 wt%. The polymeric binder will typically constitute at least 10 wt%, or at least 13 wt%, or at least 16 wt% of the mastic composition. The binder typically constitute at most 30 wt% of the composition, or at most 27 wt%, or at most 24 wt%. The weight ratio of pigment to binder will typically be at least 1.3, or at least 1.5, or at least 1.7. The ratio will typically be at most 3.5, or at most 3.3, or at most 3.2.

The mastic also contains one or more plasticizers, typically totaling from 2 wt% to 10 wt% of the composition, and one or more pigment/filler dispersants, typically at a 0.5 wt% to 1 wt% level.

To prepare the mastic compositions, the pigment is added as an aqueous pigment slurry and mixed with the binder, the other additives and water.

Application of a mastic composition to the substrate may be made with any of the usual devices known in the art, such as a brush, putty knife or caulking gun. Any support material may be coated, and typical suitable support materials include wire mesh or plastic scrim.

### Caulks

Caulks according to the invention include VAE polymers having the compositions and characteristics described above, and are free of APE surfactants and phosphate ester surfactants. The caulks according to the invention provide excellent strength, flexibility and workability, as well as extension-recovery and barrier properties, while avoiding the use of APE surfactants.

Preparation of the caulks may be according to formulation principles generally known in the art. In general, the caulks are aqueous formulations having a solids content typically of at least 75 wt%, more typically at least 80 wt%. The solids content is typically at most 95 wt%, more typically at most 90 wt%.

Kaolin and/or calcium carbonate are typical pigments, but others may be used instead or in addition. For example, calcium carbonate may constitute most of the pigment, with titanium dioxide being added at a 1-2 wt% level based on total caulk formulation weight. Thixotroping agents such as magnesium aluminum silicates or hydroxyethyl cellulose may be included in small amounts, for example at about 0.5-3 wt%. In total, the pigments will typically constitute at least 30 wt%, or at least 33 wt%, or at least 36 wt% of the caulk composition. The pigments typically constitute at most 50 wt% of the composition, or at most 47 wt%, or at most 44 wt%. The polymeric binder will typically constitute at least 10 wt%, or at least 13 wt%, or at least 16 wt% of the caulk composition. The binder typically constitute at most 30 wt% of the composition, or at most 27 wt%, or at most 24 wt%. The weight ratio of pigment to binder will typically be at least 1.3, or at least 1.5, or at least 1.7. The ratio will typically be at most 2.5, or at most 2.3, or at most 2.1.

The caulk also contains one or more plasticizers, typically totaling from 2 wt% to 10 wt% of the composition, and one or more pigment/filler dispersants, typically at a 0.5 wt% to 1 wt% level.

To prepare the caulk compositions, the pigment is added as an aqueous pigment slurry and mixed with the binder, the other additives and water.

Application of caulk composition to the substrate may be made with any of the usual devices known in the art, such as by brush, putty knife or caulking gun. Any support material may be coated, and typical suitable support materials include wire mesh or plastic scrim.

### EXAMPLES

### GLOSSARY

ACRYSOL™ ASE-60 anionic thickener (Dow Chemical, Midland, MI)
AEROSOL® MA-80-I sodium dihexyl sulfosuccinate (Cytec Industries Inc., Patterson, NJ)
AMPS® 2403 (50% solution of the sodium salt of acrylamido methyl propane sulfonic acid supplied by Lubrizol)
ASP® 400 kaolin clay (BASF, Florham Park, NJ)
BENZOFLEX™ 9-88 benzoate ester plasticizer (Eastman, Kingsport, TN)
BYK™-024 silicone defoamer (BYK Additives and Instruments, Wallingford, CT)
DRIKALITE® calcium carbonate (Imerys Performance Minerals, Roswell, GA)
FUNGITROL® 158 fungicide (ISP, Wayne, NJ)
IGEPAL® CA-897 Octylphenol ethoxylate-40, 70% (Rhodia, Cranbury, NJ)
IGEPAL® CO-630 Nonylphenol ethoxylate-9 (Rhodia)
IGEPAL® CO-887 Nonylphenol ethoxylate-30, 70% (Rhodia)
ISOPAR™ K isoparaffinic solvent (ExxonMobil Chemical, Houston, TX)
PLURONIC® L64 (ethylene oxide/propylene oxide block copolymer supplied by BASF)
RHODOLINE® 670 defoamer composition (Rhodia)
RHODACAL® DS-10 sodium dodecyl benzenesulfonates (Rhodia)
RHODAFAC® RS-610 phosphate ester of tridecyl alcohol ethoxylate (Rhodia)
ROVACE™ 86 vinyl acrylic copolymer (Dow Construction Chemicals, Midland, MI)
TAMOL® 850 sodium polymethacrylate dispersant (Dow Chemical, Midland, MI)
TI-PURE® R-706 titanium dioxide (DuPont, Wilmington, DE)
TXIB™ 2,2,4-trimethyl-1,3-pentanediol diisobutyrate (Eastman, Kingsport, TN)
VINNAPAS® 100HS VAE copolymer (Wacker Chemical Corporation, Adrian, MI)
VINNAPAS® 539 VAE copolymer (Wacker Chemical Corporation, Adrian, MI)

All polymers were prepared in a 3.98 liter (1.05 gallon) stainless steel autoclave equipped with a jacket for cooling, a mechanical turbine agitator, and metering pumps for addition of the various feeds. Deionized water was used for all. examples.

### Binder Dispersion 1

A VAE binder dispersion was prepared for use in making a comparative mastic composition. The autoclave was charged with 850 g of water, 8.4 g of AEROSOL® MA-80-I (dihexyl sulfosuccinate supplied by Cytec), 0.5 g of sodium acetate, 5.0 g of a 1% solution of ferrous ammonium sulfate. The pH of the charge was adjusted to 4.2 with 1.14 g of acetic acid. Agitation was begun and 215 g of vinyl acetate was charged.

After the initial charging, the reactor was purged with nitrogen followed by a purge with ethylene and heated under agitation to 55 °C, then 400 g of ethylene was charged. To initiate polymerization a solution of 4.5% sodium persulfate and 2.67% sodium bicarbonate was feed at 0.5 g/min and a 2.7% solution of sodium erythorbate was also feed at 0.5 g/min. Upon evidence of an exotherm, two additional feeds were begun: 1200 g of vinyl acetate was added over 120 minutes and a aqueous feed consisting of 220 g water, 16.7 g of PLURONIC® L64 (ethylene oxide/propylene oxide block copolymer supplied by BASF), 16.7 g of RHODAFAC® RS-610 (phosphate ester of tridecyl alcohol ethoxylate supplied by Rhodia), 16.7 g of AMPS® 2403 (50% solution of the sodium salt of acrylamido methyl propane sulfonic acid supplied by Lubrizol), 25.1 g acrylic acid, and 27.8 g of 7% ammonium hydroxide was feed uniformly over 120 minutes. When the monomer feeds were begun, the temperature as ramped from 55 °C to 90 °C over 60 minutes and then held at 90°C for the remainder of the reaction.

The addition rates of the sodium persulfate and sodium erythorbate solutions were adjusted over time in an effort to obtain a uniform conversion profile. Both of these additions were terminated 165 minutes after the initial exotherm was observed, when 210 g of each solution had been added.

The contents were then cooled to 35 °C then transferred to a 3 gallon autoclave where vacuum was used to remove any unreacted ethylene. At this point 1 g of RHODOLINE® 670 (a proprietary defoamer composition supplied by Rhodia) was added to reduce foaming, followed by 2 g of sodium erythorbate in 20 g of water, then 2 g of *t*-butyl hydroperoxide (70%) in 10 g of water. The contents was allowed to mix for 15 minutes and was then removed.

The physical properties of the resultant latex were:

| | |
|---|---|
| % non-volatile | 52.6 |
| Tg | -1.8 °C |
| Viscosity | 136 cps (Brookfield LVF viscometer 60 rpm) |
| pH | 5.22 |
| coagulum | <.01% 149 µm pore diameter (100 mesh screen) |

Particle Size: 216 nm weight average measured by Capillary Hydrodynamic Fractionation (CHDF)
Estimated polymer composition: 77.6% vinyl acetate, 20.5% ethylene, 0.5% 2-acrylamido-2-methylpropane sulfonic acid, 1.4% acrylic acid.

### Binder Dispersion 2

A VAE binder dispersion was prepared for use in making a mastic composition according to the invention. The autoclave was charged with 900 g of water, 8.8 g of AEROSOL® MA-80-I (dihexyl sulfosuccinate supplied by Cytec), 0.5 g of sodium acetate, 5.0 g of a 1% solution of ferrous ammonium sulfate. The pH of the charge was adjusted to 4.2 with 1.14 g of acetic acid. Agitation was begun and 262.5 g of vinyl acetate was charged.

After the initial charging, the reactor was purged with nitrogen followed by a purge with ethylene and heated under agitation to 55 °C, then 225 g of ethylene was charged. To initiate polymerization a solution of 3.75% sodium persulfate was feed at 0.5 g/min and a 2.25% solution of sodium erythorbate was also feed at 0.5 g/min. Upon evidence of an exotherm, two additional feeds were begun: 1445.5 g of vinyl acetate was added over 120 minutes and a aqueous feed consisting of 205.4 g water, 28.6 g of PLURONIC® L64 (ethylene oxide/propylene oxide block copolymer supplied by BASF), 19.1 g of RHODACAL® DS-10 (sodium dodecyl benzene sulfonate supplied by Rhodia), 19.1 g of AMPS® 2403 (50% solution of the sodium salt of acrylamido methyl propane sulfonic acid supplied by Lubrizol), 19.1 g acrylic acid, and 3.3 g of 50% sodium hydroxide was feed uniformly over 120 minutes. When the monomer feeds were begun, the temperature as ramped from 55 °C to 90 °C over 60 minutes and then held at 90°C for the remainder of the reaction.

The addition rates of the sodium persulfate and sodium erythorbate solutions were adjusted overtime in an effort to obtain a uniform conversion profile. Both of these additions were terminated 160 minutes after the initial exotherm was observed, when 140 g of each solution had been added.

The contents were then cooled to 35 °C then transferred to a 11 liter (3 gallon) autoclave where vacuum was used to remove any unreacted ethylene. At this point 1 g of RHODOLINE® 670 (a proprietary defoamer composition supplied by Rhodia) was added to reduce foaming, followed by 2 g of sodium erythorbate in 20 g of water, then 2 g of *t*-butyl hydroperoxide (70%) in 10 g of water. The contents was allowed to mix for 15 minutes and was then removed.

The physical properties of the resultant latex were:

| | |
|---|---|
| % non-volatile | 55.5 |
| Tg | 13.1 °C. |
| Viscosity | 506 cps (Brookfield LVF viscometer 60 rpm) |
| pH | 4.74 |
| coagulum | <.01% 149 µm pore diameter (100 mesh screen) |

Particle Size: 208 nm weight average measured by Capillary Hydrodynamic Fractionation (CHDF)
Estimated polymer composition: 87.7% vinyl acetate, 10.8% ethylene, 0.5% 2-acrylamido-2-methylpropane sulfonic acid, 1.0% acrylic acid.

### Binder Dispersion 3

A VAE binder dispersion was prepared for use in making a mastic composition according to the invention, and a scaled up version was prepared for making a caulk composition according to the invention. The autoclave was charged with 845 g of water, 8.4 g of AEROSOL® MA-80-I (dihexyl sulfosuccinate supplied by Cytec), 0.5 g of sodium acetate, 5.0 g of a 1% solution of ferrous ammonium sulfate. The pH of the charge was adjusted to 4.2 with 1.22 g of acetic acid. Agitation was begun and 215 g of vinyl acetate was charged.

After the initial charging, the reactor was purged with nitrogen followed by a purge with ethylene and heated under agitation to 55 °C, then 400 g of ethylene was charged. To initiate polymerization a solution of 4.5% sodium persulfate and 1.67% sodium bicarbonate was feed at 0.5 g/min and a 2.7% solution of sodium erythorbate was also feed at 0.5 g/min. Upon evidence of an exotherm, two additional feeds were begun: 1200 g of vinyl acetate was added over 120 minutes and a aqueous feed consisting of 230 g water, 25.1 g of PLURONIC® L64 (ethylene oxide/propylene oxide block copolymer supplied by BASF), 16.7 g of RHODACAL® DS-10 (sodium dodecyl benzene sulfonate supplied by Rhodia), 16.7 g of AMPS® 2403 (50% solution of the sodium salt of acrylamido methyl propane sulfonic acid supplied by Lubrizol), 25.1 g acrylic acid, and 8.7 g of 7% ammonium hydroxide was feed uniformly over 120 minutes. When the monomer feeds were begun, the temperature as ramped from 55 ° C to 90 °C over 60 minutes and then held at 90°C for the remainder of the reaction.

The addition rates of the sodium persulfate and sodium erythorbate solutions were adjusted overtime in an effort to obtain a uniform conversion profile. Both of these additions were terminated 165 minutes after the initial exotherm was observed, when 140 g of each solution had been added.

The contents were then cooled to 35 °C then transferred to a 11 liter (3 gallon) autoclave where vacuum was used to remove any unreacted ethylene. At this point 1 g of RHODOLINE® 670 (a proprietary defoamer composition supplied by Rhodia) was added to reduce foaming, followed by 2 g of sodium erythorbate in 20 g of water, then 2 g of *t*-butyl hydroperoxide (70%) in 10 g of water. The contents was allowed to mix for 15 minutes and was then removed.

The physical properties of the resultant latex were:

| | |
|---|---|
| % non-volatile | 54.4 |
| Tg | -1.4 °C |
| Viscosity | 239 cps (Brookfield LVF viscometer 60 rpm) |
| pH | 4.8 |
| coagulum | <.01% 149 µm pore diameter (100 mesh screen) |

Particle Size: 239 nm weight average measured by Capillary Hydrodynamic Fractionation (CHDF)
Estimated polymer composition: 77.6% vinyl acetate, 20.5% ethylene, 0.5% 2-acrylamido-2-methylpropane sulfonic acid, 1.4 % acrylic acid.

### Mastic Applications

Mastics are certified by Underwriters Laboratories in the form of two specifications, UL 181A, "Closure Systems for Use with Rigid Air Ducts, and UL 181B, Closure Systems for Use with Flexible Air Ducts and Air Connectors. One particular test in UL 181A is 13.1 Temperature Pressure Cycling Test, which measures the number of days of cure required for scrim bonded with mastic to the foil side of a foil/scrim/kraft (FSK) laminate to exhibit substrate failure rather than adhesive failure. Results of such testing are shown in Table 1.

Briefly, the UL 181A is 13.1 test is performed as follows. Two pieces of F/S/K faced duct board are positioned together to form a butt joint seam. The mastic is applied to the foils surface of the seam, overlapping both sections to be fastened. A fiberglass scrim such as a dry wall reinforcing tape is forced into the layer of mastic and a second layer of mastic is applied on top. To determine cure time, the fiberglass scrim is lifted and pulled in a direction parallel to the joint. Cure is considered to have been reached when substrate failure, rather than adhesive failure, occurs during testing.

Four mastic compositions were prepared according to the general composition shown below. Only the polymeric binder dispersion was varied, with two of the mastics being comparative examples and two being examples according to the invention.

| | Wt. % |
|---|---|
| Polymeric binder dispersion | 37.3 |
| Biocide and fungicide | 0.3 |
| Nonionic surfactant/dispersion stabilizer¹ | 0.2 |
| Plasticizer/flame retardant | 6.9 |
| Defoamer | 0.1 |
| Pigment dispersant(s) | 0.5 |
| Solvent/ freeze-thaw agent | 3.4 |
| Alkali swellable thickener/ increase viscosity | 1.5 |
| Calcium carbonate, clay, base-activated thixotrope | 38.8 |
| 29% aqueous ammonia | 0.1 |
| Monoethanolamine | 0.5 |
| water | 9.6 |
| Fibrous Reinforcing agent | 0.2 |

| | |
|---|---|
| ¹ An alkylphenol ethoxylate surfactant was used in these examples. Non-APE nonionic surfactants such as ethylene oxide tridecyl alcohols, sold commercially as RHODASURF® TLA 4050 (Rhodia), may be used instead. | |

The mastics were evaluated as described above, and the results are shown below in Table 1.

**Table 1**

| Mastic | Binder Dispersion | Anionic Surfactant | Carboxylic Acid Level¹ | Days of Cure to Substrate Failure |
|---|---|---|---|---|
| C1 | VINNAPAS^{®} 100HS | | 0.57 | 19 |
| C2 | Binder Dispersion 1 | RHODAFAC^{®} RS-610, AEROSOL^{®} MA-80-I | 1.4 | Adhesive Failure |
| I3 | Binder Dispersion 2 | RHODACAL^{®} DS-10, AEROSOL^{®} MA-80-I | 1.0 | 6 |
| I4 | Binder Dispersion 3 | RHODACAL^{®} DS-10, AEROSOL^{®} MA-80-I | 1.4 | 3 |

| | | | | |
|---|---|---|---|---|
| ¹wt% of carboxylic acid monomer in binder polymer C = Comparative Example, I = Inventive Example | | | | |

Due to the nature of the foil surface of the FSK, conventional vinyl acetate-ethylene (VAE) based mastics have provided poor adhesion of this duct material to the mastic/scrim combination. When dispersions according to the invention are used, however, excellent adhesion is typically obtained, as evidenced by foil tear rather than adhesive failure during testing. In addition, faster cure rates are seen, as indicated in Table 1.

Mastic C1 was a comparative example using a commercially available VAE binder dispersion (VINNAPAS® 100HS) commonly used in mastic formulations. This binder includes a lower level of carboxylic acid (maleic acid) as a comonomer than binders useful for the present invention, and contains an alkylphenol ethoxylate (APE) surfactant. Comparative mastic C1 eventually showed substrate failure, but only after nearly three weeks' cure time. Thus, its curing performance was poor.

Comparative mastic C2 used an APE-free binder composition that contained a higher level of carboxylic acid (1.5% acrylic acid) copolymerized with vinyl acetate and ethylene than did comparative mastic C1. Although the amount of carboxylic acid content was sufficient, the mastic failed to properly cure even after more than three weeks, as indicated by continued adhesive failure rather than substrate failure. The VAE dispersion used in this mastic contained a surfactant with phosphate ester groups (RHODAFAC® RS-610), and the inventors have found that the presence of phosphate ester surfactants interferes with adhesion to the foil surface of the FSK. Accordingly, mastic compositions according to the invention are free of phosphate ester surfactants.

In contrast, inventive mastics I3 and I4 had all three of the features that the inventors have found useful in providing a mastic with excellent performance properties: the binder emulsions had a sufficiently high carboxylic monomer content and were free of alkylphenol ethoxylate (APE) surfactants and phosphate ester surfactants. (Both I3 and I4 used dispersions employing a sodium dodecyl benzenesulfonate surfactant rather than a phosphate ester surfactant.) Mastics I3 and I4 provided very quick cure times of six and three days, respectively.

A preferred mastic according to the invention may be prepared by combining the following ingredients in the amounts shown below. In this embodiment, the entire mastic formulation is APE-free.

| | Wt. % |
|---|---|
| Binder Dispersion 3 | 37.3 |
| FUNGITROL® 158 fungicide | 0.3 |
| RHODASURF® TLA 4050 (non-APE surfactant) | 0.2 |
| BENZOFLEX™ 9-88 plasticizer | 6.9 |
| BYK™ 024 defoamer | 0.1 |
| TAMOL® 850 dispersant | 0.5 |
| Propylene glycol | 3.4 |
| ACRYSOL® ASE 60 alkali swellable thickener | 1.5 |
| DRIKALITE® calcium carbonate | 36.8 |
| ASP® 400 clay | 2.0 |
| 29% aqueous ammonia | 0.1 |
| Monoethanolamine | 0.5 |
| Water | 9.6 |
| Polyester fiber | 0.2 |

### Caulk Applications

Three comparative caulk formulations (designated C1-C3) were prepared and evaluated in comparison with a caulk formulation (I4) according to the invention. Comparative caulk C1 was made with ROVACE™ 86 (Dow Construction Chemicals, Midland, MI), a vinyl acrylic copolymer standard to the industry, according to the formulation shown in Table 2.

Comparative caulks C2 and C3 were made with standard commercially available VAE dispersions (VINNAPAS® 100HS and VINNAPAS® EF 539, respectively), VINNAPAS® 100HS is a VAE binder emulsion containing APE surfactants, in which the binder polymer includes carboxylic acid monomer units at a lower level than suitable for purposes of making caulks according to the invention. VINNAPAS® EF 539 is an APE-free VAE binder emulsion in which the binder polymer does not include carboxylic acid monomer units. Inventive caulk C4 used an APE-free, phosphate ester surfactant-free VAE dispersion comprising a sufficiently high content of carboxylic acid comonomer to provide good performance properties according to the invention, and is free of APE surfactants and phosphate ester surfactants. The VAE dispersion for inventive caulk I4 was made in a scaled-up version of the process described above for Binder Dispersion 3.

The formulations and physical properties of comparative caulk formulations C1-C3 and inventive formulation I4 are shown below in Tables 2-6.

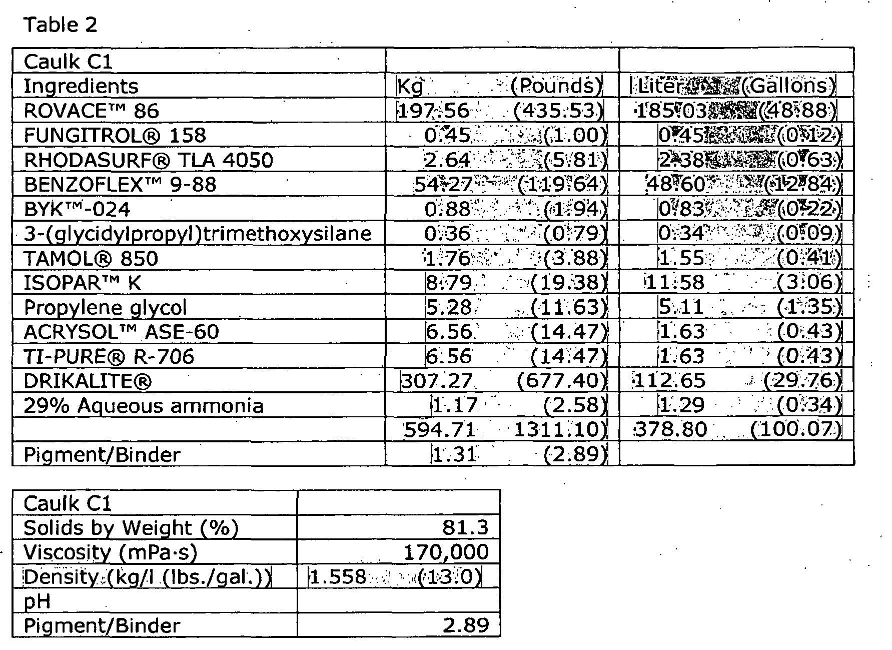

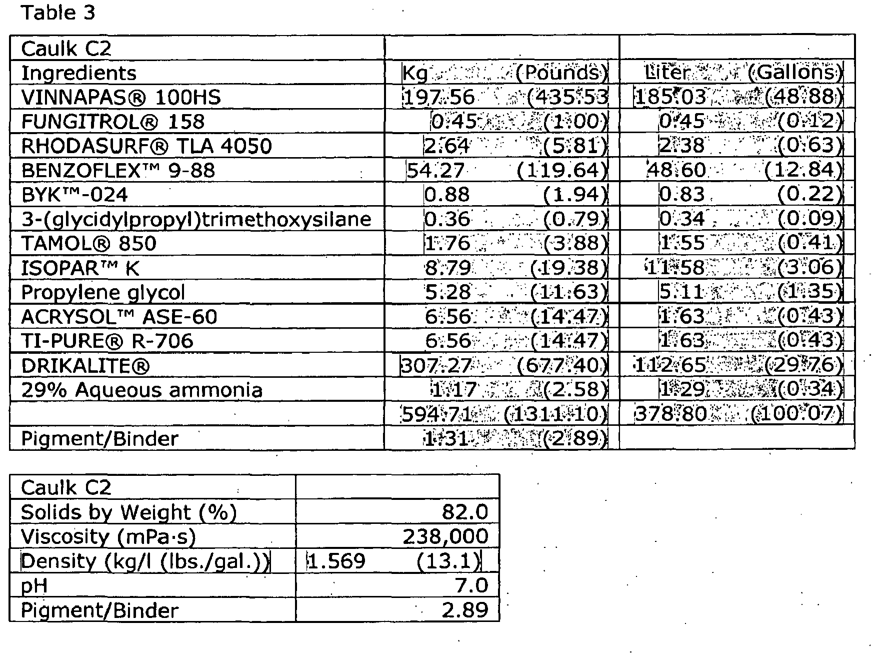

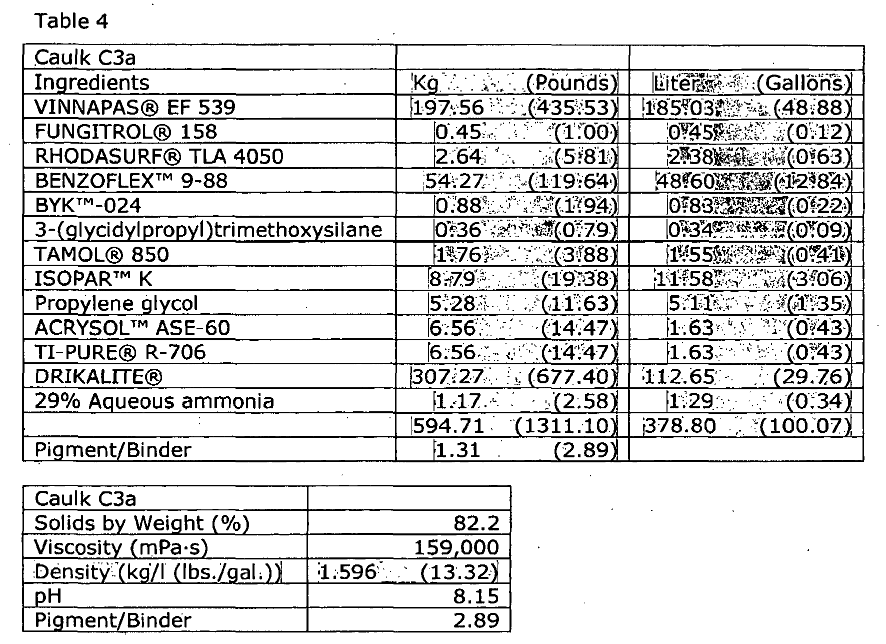

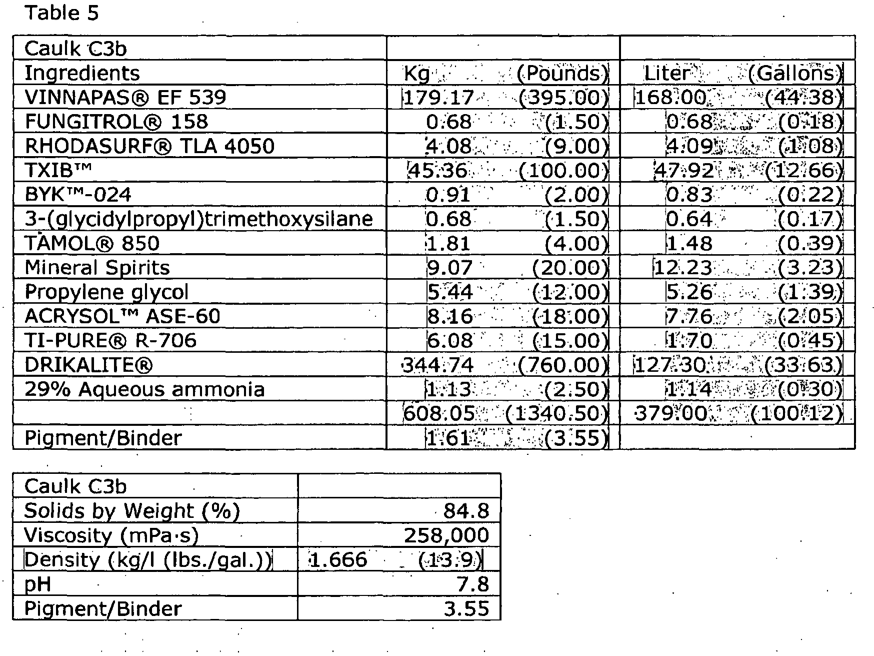

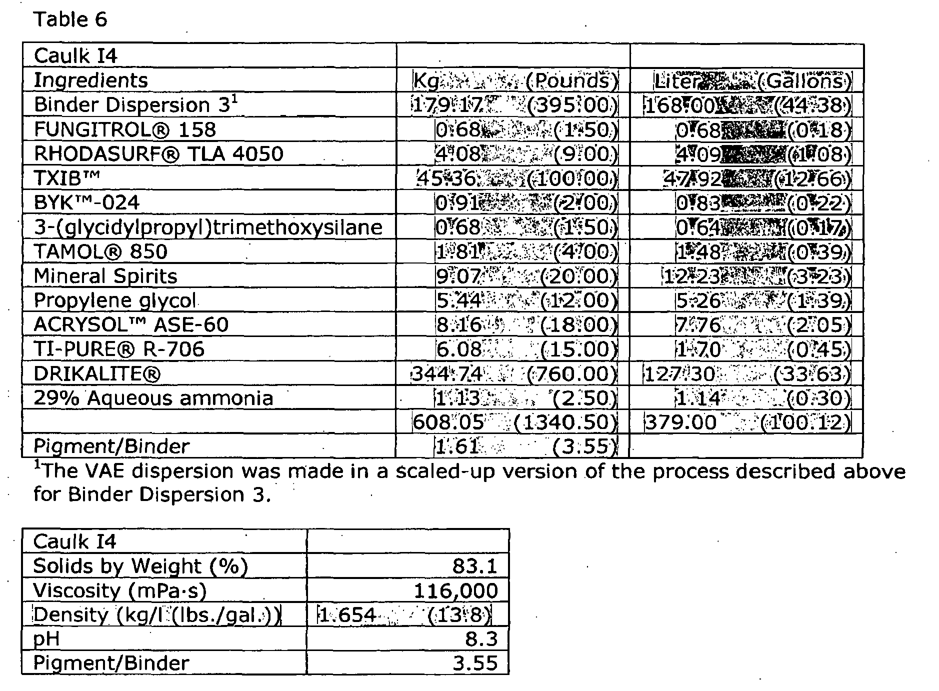

Performance testing of caulks 1-4 gave the results shown below in Table 7, where P/B indicates the weight ratio of total pigment to binder on a solids basis.

**Table 7**

| Caulk | Carboxylic Acid Level¹ | Pigment/ Binder | Tensile at Break | Elongation at Break | Freeze/Thaw | ASTM C-834 Extension-Recovery | ASTM C-834 Low Temperature Flex |
|---|---|---|---|---|---|---|---|
| C1 | n/a | 2.89 | 55 | 146 | Pass | 85% | Pass |
| C2 | 0.57 | 2.89 | 84 | 69 | Fail | --- | Fail |
| C3a | 0 | 2.89 | 29 | 543 | Fail | 85% | Pass |
| C3b | 0 | 3.55 | --- | --- | --- | --- | Fail |
| I4 | 1.4 | 3.55 | 90 | 119 | Pass | 100% | Pass |

| | | | | | | | |
|---|---|---|---|---|---|---|---|
| ¹wt% of carboxylic acid monomer in binder polymer C = Comparative Example, I = Inventive Example | | | | | | | |

As shown in Table 7, inventive caulk I4 was the only VAE-based caulk to pass the Freeze/Thaw test, and the only caulk to show 100% Extension-Recovery, even at a high pigment/binder ratio (3.5). It also had the highest Tensile at Break of any of the caulks tested, even at high pigment/binder, and was the only VAE able to meet the ASTM C-834 Low Temperature Flex standard at that high pigment/binder ratio. As is known in the art, high pigment/binder ratios tend to decrease extension-recovery and low temperature flex performance, and thus the performance of caulk I4 was particularly impressive.

Caulk I4, made according to the invention, passed all ASTM C 834 requirements. In addition, it had good freeze-thaw stability and higher tensile strength than comparative caulk C1, made with an industry standard vinyl acrylic copolymer, indicating a better ability to absorb stresses occurring in caulked joints.

As seen in Table 7, the use of Binder Dispersion 3 made it possible to formulate inventive caulk I4 at a higher pigment loading than the other VAE dispersions while maintaining good caulk properties. Note the large amount of DRIKALITE® calcium carbonate in inventive caulk I4. Caulk 14 showed good tensile strength and exceptional performance in both ASTM C 834 extension-recovery and low temperature flex, as well as good freeze-thaw stability.

## Claims

1. A pigmented latex composition having a solids content in a range from 70 wt% to 95 wt%, comprising
a) an aqueous dispersion of a polymeric binder that is a copolymer comprising units of vinyl acetate, ethylene and at least one ethylenically unsaturated carboxylic acid or salt thereof, said polymeric binder constituting in a range from 10 wt% to 30 wt% of the composition; wherein
vinyl acetate units constitute in a range of 75 - 95 wt% of the polymeric binder, ethylene units constitute in a range of at least 5 wt% of the polymeric binder and ethylenically unsaturated carboxylic acid units constitute in a range from 0.75 wt% to 5 wt% of the polymeric binder;
the aqueous dispersion of the polymeric binder is free of alkylphenol ethoxylate surfactants and phosphate ester surfactants; and
the polymeric binder has a weight average particle size in a range from 0.1 µm to 0.3 µm;
b) one or more pigments constituting in a range from 30 wt% to 50 wt% of the composition, selected from the group consisting of polymeric pigments, aluminosilicates, calcium carbonate, titanium dioxide, talc, barium sulfate, zinc oxide, aluminum trihydrate, amorphous silica and silicates;
c) one or more plasticizers; and
d) one or more pigment dispersants.

2. The composition of claim 1, wherein the composition is free of alkylphenol ethoxylate surfactants and phosphate ester surfactants.

3. The composition of claim 1, wherein the ethylenically unsaturated carboxylic acid or salt thereof comprises acrylic acid or a salt thereof.

4. The composition of claim 1, wherein the copolymer further comprises units of an ethylenically unsaturated sulfonic acid or salt thereof.

5. The composition of claim 4, wherein the ethylenically unsaturated sulfonic acid or salt thereof comprises 2-acrylamido-2-methylpropane sulfonic acid and/or a salt thereof.

6. The composition of claim 1, wherein the copolymer further comprises units of a polyunsaturated comonomer.

7. The composition of claim 1, wherein the polymeric binder comprises a polyethylene oxide/polypropylene oxide block copolymer surfactant.

8. The composition of claim 1, wherein the aqueous dispersion of the polymeric binder comprises a polyethylene oxide/polypropylene oxide/polyethylene oxide triblock copolymer surfactant.

9. The composition of claim 8, wherein the aqueous dispersion of the polymeric binder further comprises a sodium sulfosuccinic diester of a C6-C22 alkanol.

10. The composition of claim 8, wherein the aqueous dispersion of the polymeric binder further comprises sodium dihexyl sulfosuccinate.

11. The composition of claim 8, wherein the aqueous dispersion of the polymeric binder comprises sodium dodecyl benzenesulfonate.

12. A method of sealing a joint or gap at two adjoining substrate surfaces, comprising applying to the surfaces the composition of claim 1 and subsequently curing the composition.

13. The method of claim 12, further comprising incorporating a scrim into the composition before curing it.

## Patentansprüche

1. Pigmentierte Latexzusammensetzung mit einem Feststoffgehalt im Bereich von 70 Gew.-% bis 95 Gew.-%, umfassend
a) eine wässrige Dispersion eines polymeren Bindemittels, bei dem es sich um ein Copolymer handelt, das Einheiten von Vinylacetat, Ethylen und mindestens einer ethylenisch ungesättigten Carbonsäure oder einem Salz davon umfasst, wobei das Polymerbindemittel 10 Gew.-% bis 30 Gew.-% der Zusammensetzung ausmacht; wobei
Vinylacetat-Einheiten 75-95 Gew.-% des polymeren Bindemittels ausmachen, EthylenEinheiten mindestens 5 Gew.-% des polymeren Bindemittels ausmachen und Einheiten von ethylenisch ungesättigten Carbonsäuren 0,75 Gew.-% bis 5 Gew.-% des polymeren Bindemittels ausmachen;
die wässrige Dispersion des polymeren Bindemittels frei von Alkylphenolethoxylat-Tensiden und Phosphatester-Tensiden ist; und das polymere Bindemittel eine gewichtsmittlere Teilchengröße in einem Bereich von 0,1 µm bis 0,3 µm aufweist;
b) ein oder mehrere Pigmente, die 30 Gew.-% bis 50 Gew.-% der Zusammensetzung ausmachen, ausgewählt aus der Gruppe bestehend aus polymeren Pigmenten, Aluminosilikaten, Calciumcarbonat, Titandioxid, Talk, Bariumsulfat, Zinkoxid, Aluminiumtrihydrat, amorphem Siliciumdioxid und Silikaten;
c) einen oder mehrere Weichmacher; und
d) ein oder mehrere Pigmentdispergiermittel.

2. Zusammensetzung nach Anspruch 1, wobei die Zusammensetzung frei von Alkylphenolethoxylat-Tensiden und Phosphatester-Tensiden ist.

3. Zusammensetzung nach Anspruch 1, wobei die ethylenisch ungesättigte Carbonsäure oder das Salz davon Acrylsäure oder ein Salz davon umfasst.

4. Zusammensetzung nach Anspruch 1, wobei das Copolymer ferner Einheiten einer ethylenisch ungesättigten Sulfonsäure oder eines Salzes davon umfasst.

5. Zusammensetzung nach Anspruch 4, wobei die ethylenisch ungesättigte Sulfonsäure oder das Salz davon 2-Acrylamido-2-methylpropansulfonsäure und/oder ein Salz davon umfasst.

6. Zusammensetzung nach Anspruch 1, wobei das Copolymer ferner Einheiten eines mehrfach ungesättigten Comonomers enthält.

7. Zusammensetzung nach Anspruch 1, wobei das polymere Bindemittel ein Polyethylenoxid/Polypropylenoxid-Blockcopolymer-Tensid umfasst.

8. Zusammensetzung nach Anspruch 1, wobei die wässrige Dispersion des polymeren Bindemittels ein Polyethylenoxid/Polypropylenoxid/Polyethylenoxid-Triblockcopolymer-Tensid umfasst.

9. Zusammensetzung nach Anspruch 8, wobei die wässrige Dispersion des polymeren Bindemittels ferner einen Natriumsulfobernsteinsäurediester eines C6-C22-Alkanols umfasst.

10. Zusammensetzung nach Anspruch 8, wobei die wässrige Dispersion des polymeren Bindemittels ferner Natriumdihexylsulfosuccinat umfasst.

11. Zusammensetzung nach Anspruch 8, wobei die wässrige Dispersion des polymeren Bindemittels Natriumdodecylbenzolsulfonat umfasst.

12. Verfahren zum Versiegeln einer Fuge oder Spalte an zwei aneinanderstoßenden Substratoberflächen, bei dem man auf die Oberflächen die Zusammensetzung nach Anspruch 1 aufbringt und anschließend die Zusammensetzung härtet.

13. Verfahren nach Anspruch 12, bei dem man ferner vor der Härtung einen Gitterstoff in die Zusammensetzung einarbeitet.

## Revendications

1. Composition de latex pigmentée ayant une teneur en solides de 70 % en poids à 95 % en poids, comprenant :
a) une dispersion aqueuse d'un liant polymère qui est un copolymère comprenant des unités d'acétate de vinyle, d'éthylène et d'au moins un acide carboxylique à insaturation éthylénique ou un sel de celui-ci, ledit liant polymère constituant de 10 % en poids à 30 % en poids de la composition ; dans laquelle
les unités d'acétate de vinyle constituent de 75 % en poids à 95 % en poids du liant polymère, les unités d'éthylène constituent au moins 5 % en poids du liant polymère et les unités d'acide carboxylique à insaturation éthylénique constituent de 0,75 % en poids à 5 % en poids du liant polymère ;
la dispersion aqueuse du liant polymère est exempte de tensioactifs éthoxylate d'alkylphénol et de tensioactifs ester de phosphate ; et
le liant polymère a une taille de particule moyenne en poids de 0,1 µm à 0,3 µm ;
b) un ou plusieurs pigments constituant de 30 % en poids à 50 % en poids de la composition, sélectionnés dans le groupe constitué de pigments polymères, d'aluminosilicates, de carbonate de calcium, de dioxyde de titane, de talc, de sulfate de baryum, d'oxyde de zinc, de trihydrate d'aluminium, de silice amorphe et de silicates ;
c) un ou plusieurs plastifiants ; et
d) un ou plusieurs dispersants de pigments.

2. Composition selon la revendication 1, la composition étant exempte de tensioactifs éthoxylate d'alkylphénol et de tensioactifs ester de phosphate.

3. Composition selon la revendication 1, dans laquelle l'acide carboxylique à insaturation éthylénique ou le sel de celui-ci comprend l'acide acrylique ou un sel de celui-ci.

4. Composition selon la revendication 1, dans laquelle le copolymère comprend en outre des unités d'un acide sulfonique à insaturation éthylénique ou un sel de celui-ci.

5. Composition selon la revendication 4, dans laquelle l'acide sulfonique à insaturation éthylénique ou le sel de celui-ci comprend l'acide 2-acrylamido-2-méthylpropanesulfonique et/ou un sel de celui-ci.

6. Composition selon la revendication 1, dans laquelle le copolymère comprend en outre des unités d'un comonomère polyinsaturé.

7. Composition selon la revendication 1, dans laquelle le liant polymère comprend un tensioactif copolymère à blocs d'oxyde de polyéthylène/oxyde de polypropylène.

8. Composition selon la revendication 1, dans laquelle la dispersion aqueuse du liant polymère comprend un tensioactif copolymère tribloc d'oxyde de polyéthylène/oxyde de polypropylène/oxyde de polyéthylène.

9. Composition selon la revendication 8, dans laquelle la dispersion aqueuse du liant polymère comprend en outre un diester sulfosuccinique de sodium d'un alcanol C6-C22.

10. Composition selon la revendication 8, dans laquelle la dispersion aqueuse du liant polymère comprend en outre le dihexylsulfosuccinate de sodium.

11. Composition selon la revendication 8, dans laquelle la dispersion aqueuse du liant polymère comprend le dodécylbenzènesulfonate de sodium.

12. Procédé d'étanchement d'un joint ou d'un espace au niveau de deux surfaces de substrats contiguës, comprenant l'application sur les surfaces de la composition selon la revendication 1 puis le durcissement de la composition.

13. Procédé selon la revendication 12, comprenant en outre l'incorporation d'un canevas dans la composition avant son durcissement.
